# FASCICULE DE BREVET EUROPEEN

(11) **EP 2 364 206 B1**
(45) Date de publication et mention de la délivrance du brevet: **24.03.2021**
(21) Numéro de dépôt: 09801739.5
(22) Date de dépôt: 03.12.2009
(51) Int. Cl.: B01J 20/18, B01J 20/28, B01D 53/28, B01D 53/04

(54) **ADSORBANT ZEOLITIQUE A LIANT ORGANIQUE**
ZEOLITHADSORBENS MIT ORGANISCHEM BINDEMITTEL
ZEOLITE ADSORBENT HAVING AN ORGANIC BINDER

(30) Priorité: 05.12.2008 FR 0858293
(43) Date de publication de la demande: 14.09.2011
(73) Titulaire: ARKEMA FRANCE, 92700 Colombes (FR)
(72) Inventeur: BOUVIER, Ludivine, 64300 ORTHEZ (FR); NICOLAS, Serge, F-64140 Lons (FR); MEDEVIELLE, Alice, F-64000 Pau (FR); ALEX, Patrick, 91470 LIMOURS EN HUREPOIX (FR)
(74) Mandataire: Arkema Patent
(86) Numéro de dépôt international: PCT/FR2009/052406
(87) Numéro de publication internationale: WO 2010/063975

(56) Documents cités:
- EP-A- 1 323 468
- WO-A-2006/069781
- US-A- 4 013 566
- US-A- 5 935 891
- US-B1- 6 602 444

## Description

La présente invention concerne un adsorbant zéolitique aggloméré comprenant au moins une matrice polymère fortement chargée par au moins un adsorbant de type zéolite. L'invention concerne également le procédé de préparation d'un tel adsorbant, notamment obtenu par extrusion, ainsi que ses utilisations, notamment comme adsorbant d'humidité, d'odeurs, de composants organiques volatils, et autres.

Les adsorbants zéolitiques couramment utilisés aujourd'hui sont des adsorbants comprenant une ou plusieurs zéolites agglomérées à l'aide d'un liant minéral. Ces agglomérés se présentent sous diverses formes, le plus souvent sous forme de billes, extrudés, filés, poudres et autres, de granulométries plus ou moins importantes, généralement de quelques micromètres à quelques millimètres.

Ces adsorbants agglomérés sont alors utilisés tels quels, par exemple pour remplir des colonnes de purification, de séparation, de liquides ou de gaz, ou encore pour supporter des catalyseurs mis en œuvre dans des réactions chimiques.

De tels agglomérés présentent toutefois l'inconvénient de générer des poussières, des fines, des fumées, et nécessitent des précautions d'emploi, et surtout un conteneur permettant de confiner lesdits agglomérés pour pouvoir les utiliser Les documents EP 1 323 468 et WO 2006/069781 divulguent un matériau adsorbant zéolitique à liant organique comprenant une matrice polymère et une zéolite, la zéolite pouvant être une zéolite 3A.

Afin de pouvoir s'affranchir des problèmes liés à la manutention de poudres et d'agglomérés zéolitiques, et de pouvoir disposer d'adsorbants zéolitiques solides, mis en forme (ne nécessitant pas de conteneur pour être manipulés), il a été proposé d'insérer des poudres de zéolites et/ou des agglomérés zéolitiques dans une matrice polymère. Ladite matrice polymère peut alors être mise en forme par moulage, injection, extrusion, et autres.

De tels articles mis en forme sont plus aisément manipulables que les poudres de zéolites ou les agglomérés de poudres zéolitiques, et sont ainsi plus facilement utilisés en tant qu'adsorbant sous forme de granulats, films, barres, barrettes, joncs, et autres.

Toutefois, les adsorbants zéolitiques à matrice polymère (i.e. à liant organique) proposés jusqu'à aujourd'hui souffrent de nombreux inconvénients, le principal étant la faible teneur en zéolite qui peut être incorporée dans la matrice polymère.

En effet, l'état de la technique montre qu'il est relativement difficile d'atteindre des teneurs élevées en zéolite dans une matrice polymère par mélange de poudre de zéolite dans une matrice polymère à l'état fondu.

En outre, les propriétés mécaniques des articles obtenus par extrusion, extrusion-moulage ou moulage d'adsorbants zéolitiques à matrice polymère diminuent considérablement lorsque la teneur massique en poudre de zéolites augmente dans ladite matrice polymère.

Il résulte que, jusqu'à présent, les adsorbants zéolitiques à liant organique sont friables, cassants et/ou ne possèdent que de faibles capacités d'adsorption.

Afin de pallier ces inconvénients, il a été proposé des préparations de compositions de poudre de zéolite et de polymère, en présence d'agents porogènes et/ou d'auxiliaires de processabilité (« processing aids » en langue anglaise).

Cette solution présente l'inconvénient de réduire le taux de zéolite pour un même volume d'adsorbant zéolitique à matrice organique. Néanmoins, ces agents porogènes et « processing aids » créent de la macro- / méso-porosité dans la matrice organique, ce qui conduit à des cinétiques d'adsorption rapides, et, de là, à une durée d'efficacité très brève.

Il reste donc un besoin pour des adsorbants zéolitiques à liant organique de capacité d'adsorption maximale, avec une cinétique d'adsorption lente, et qui soient dotés de bonnes propriétés mécaniques. Ce besoin est particulièrement important pour des matériaux adsorbants zéolitiques se présentant sous la forme de solides (ou monolithes) qui peuvent être obtenus par extrusion, moulage, extrusion-moulage, injection, moulage par injection, et autres.

De tels adsorbants zéolitiques à liant organique forment un premier objectif de la présente invention. D'autres objectifs encore apparaîtront au cours de l'exposé de l'invention qui suit.

Ainsi, la présente invention concerne tout d'abord un matériau adsorbant zéolitique à liant organique comprenant :
a) une matrice polymère, et
b) au moins une zéolite de type 3A, et dans lequel:
   - les cristaux de zéolite sont répartis de manière homogène dans ladite matrice, et
   - la quantité de cristaux de zéolite est supérieure à 70% par rapport au poids total dudit matériau adsorbant, et inférieure à 99%, de préférence inférieure à 95%, de préférence encore inférieure à 90%, de manière tout à fait préférée inférieure ou égale à 85% en poids par rapport au poids total dudit matériau adsorbant, et
   - la zéolite comprise dans le matériau adsorbant zéolitique est une zéolite naturelle, synthétique ou artificielle, dont la granulométrie moyenne est inférieure à 20 µm , de préférence inférieure à 15 µm et est supérieure à 0,05 µm, de préférence supérieure à 0,1 µm, et
   - la matrice polymère comprend un copolymère éthylène/acrylate de butyle, et
   - ledit matériau adsorbant zéolitique présente un seul type de porosité qui est une micro-porosité.

La présente invention est définie par les revendications 1 à 6 annexées. Au sens de l'invention, le matériau adsorbant zéolitique est généralement obtenu à partir d'un compound (mélange, puis mis en forme par exemple par extrusion, moulage, extrusion-moulage, injection-extrusion) ou toute autre technique connue de l'homme du métier permettant l'obtention d'un article sous forme solide à partir d'au moins une matrice polymère fondue.

La matrice polymère comprend un copolymère éthylène/acrylate de butyle.

La matrice polymère peut également comprendre, en totalité ou en partie, un ou plusieurs polymères, homo- et/ou copolymères, susceptibles de former un assemblage supramoléculaire. Par assemblage supramoléculaire, on entend des polymères, homo et/o copolymères, susceptibles de s'associer entre eux au moyen de liaisons hydrogène.

Parmi les polymères dits « supramoléculaires », on peut citer, à titre d'exemples non limitatifs, les polymères semi-cristallins, et notamment ceux formés par assemblage supramoléculaire de composés résultants de la condensation d'un acide gras et/ou d'un dimère d'acide gras et/ou d'un trimère d'acide gras et d'au moins une amine associative (susceptible de former des liaisons hydrogène) choisie parmi la 1-(2-aminoéthyl)-imidazolidin-2-one (UDETA), la 1-(2-[(2-aminoéthyl)-amino]éthyl)imidazolidone (UTETA), la 1-(2-{2-[(2-aminoéthylamino]éthyl}-amino)éthyl]imidazolidone (UTEPA), et la N-(6-aminohexyl)-N'-(6-méthyl-4-oxo-1,4-dihydropyrimidin-2-yl)urée (UPy), et leurs mélanges.

La zéolite comprise dans le matériau aggloméré selon la présente invention est une zéolite naturelle, synthétique ou artificielle, sous forme cristallisée, et dont la granulométrie moyenne est inférieure à 20 µm, de préférence inférieure à 15 µm et est supérieure à 0,05 µm, de préférence supérieure à 0,1 µm. La granulométrie moyenne est mesurée par diffraction laser. Dans les exemples de l'invention cette granulométrie est mesurée à l'aide d'un appareil Malvern® Instrument Mastersizer S, norme NF ISO 13320 (2000).

Il est bien entendu que l'on peut utiliser un mélange de deux ou plusieurs zéolites. Ceci est particulièrement avantageux lorsque l'on souhaite moduler la capacité d'adsorption et/ou la cinétique d'adsorption du matériau selon la présente invention, les différents types de zéolites possédant chacun des capacités et des cinétiques d'adsorption propres.

Selon un autre aspect de la présente invention, le matériau adsorbant selon la présente invention peut comprendre en outre un ou plusieurs additifs, couramment utilisés dans les techniques de compoundage. Des exemples non limitatifs de tels additifs peuvent être choisis parmi les stabilisants UV, pigments, colorants, anti-oxydants, modifiants chocs, matériaux à changement de phase (MCP), agents ignifugeants, agents odorants, et autres.

Selon un aspect de l'invention, le matériau adsorbant selon l'invention peut comprendre un ou plusieurs composé susceptible de changer de couleur (indicateur coloré) selon le degré d'adsorption de la zéolite. De tels composés sont par exemple des pigments, des encres, des colorants qui réagissent chimiquement en changeant de couleur. Des exemples d'encres réactives sont par exemple décrites dans la demande WO 2006/079713.

Il a été découvert de manière surprenante qu'il est possible de préparer un matériau adsorbant zéolitique à matrice organique, dans lequel est incorporée au moins une zéolite possédant les caractéristiques mentionnées ci-dessus.

Plus précisément, pour la préparation du matériau aggloméré à matrice organique, on réalise un compoundage des matières plastiques à l'état fondu avec la ou les zéolite(s), à l'aide d'un outil connu de l'homme de l'art, à titre d'exemple, on peut citer les mélangeurs internes (e.g. type Banbury), les mélangeurs à cylindre, les extrudeuses mono-vis, bi-vis, contra- ou co-rotatives, les co-malaxeurs continus (e.g. type Buss). L'outil de compoundage peut être l'un des outils cités ci-dessus ou leur association, comme par exemple un co-malaxeur associé à une mono-vis de reprise, une bi-vis co-rotative associée à une pompe à engrenage, et autres.

L'outil de compoundage est configuré de manière à identifier une zone de fusion du polymère, une zone de mélange et/ou une zone de détente/dégazage pour éliminer les composés volatils. Ces différentes zones peuvent être matérialisées par la configuration de la vis de l'outil, l'utilisation de zone de restriction, ou l'accouplement d'outils entre eux.

L'outil peut également être équipé d'un système de filtration, de préférence continu, de manière à supprimer les agglomérats non dispersés. Enfin l'outil est équipé d'un système de granulation à joncs, avec refroidissement sous air ou sous eau, adapté à la rhéologie du compound par sa géométrie et ses caractéristiques thermiques.

La matrice polymère et la ou les zéolite(s), ainsi que les éventuels additifs, peuvent être introduits simultanément ou séparément. En particulier, la ou les zéolite(s) peu(ven)t être introduite(s) en totalité ou partie, soit en trémie principale avec la matrice polymère solide, soit dans la matrice polymère fondue, au moyen d'un outil de gavage.

Les cristaux de zéolite(s) sont répartis de manière homogène dans le matériau adsorbant, c'est-à-dire sans gradient de concentration en zéolite dans le matériau adsorbant.

Le matériau adsorbant ainsi obtenu présente une seule porosité qui est la porosité intrinsèque de la zéolite, contrairement aux matériaux adsorbants connus de l'art antérieur.

De manière tout à fait surprenante, il est observé que les matériaux adsorbants selon l'invention, malgré leur taux très élevé en zéolite conservent des propriétés polymères et sont non friables.

En outre, les matériaux adsorbants selon l'invention présentent des cinétiques d'adsorption très lentes, comme indiqués dans les exemples illustrant l'invention et qui sont présentés ci-après.

En effet, les matériaux adsorbants zéolitiques à matrice organique de l'art antérieur présentent des cinétiques d'adsorption relativement rapides, ce qui peut s'expliquer par le fait que les adsorbants zéolitiques de l'art antérieur renferment des micro-canaux et peuvent donc se caractériser par une « double-porosité », i.e. une « micro-porosité » (due aux zéolites) et une « macro-porosité » (due aux micro-canaux). Ceci entraîne des durées variant de quelques heures à quelques jours pour saturer complètement ou quasi complètement lesdits adsorbants de l'art antérieur.

Au contraire des adsorbants zéolitiques de l'art antérieur, les adsorbants zéolitiques à liant organique de l'invention présentent un seul type de porosité qui est une micro-porosité, permettant une cinétique d'adsorption contrôlée, plus ou moins rapide, et une action de longue durée (quelques mois jusqu'à un an par exemple).

En outre la cinétique peut avantageusement être modulée par incorporation dans la matrice polymère d'un mélange de deux ou plusieurs zéolites de porosités différentes, mais aussi par la nature du ou des liants organiques (matrice(s) polymère(s)). Il doit être compris que la nature des zéolite(s)/matrice(s) polymère(s) permet de contrôler la nature des molécules adsorbées, ainsi que la cinétique d'adsorption.

Ainsi, l'homme du métier, spécialiste de l'adsorption sur zéolites, pourra choisir la nature de la ou des zéolite(s) devant être incorporée(s) dans la matrice polymère, en fonction de la nature des molécules à adsorber (eau, molécules organiques odorantes, contaminantes, et autres).

De même, la nature de la matrice polymère permet d'ajuster la cinétique d'adsorption. En particulier, une modulation de la cristallinité du ou des polymère(s) formant la matrice polymère (par exemple polyéthers de diverses cristallinités), permet de moduler la cinétique d'adsorption. D'autres possibilités encore de modulation de la cinétique d'adsorption seront aisément accessibles à l'homme du métier, en apportant des modifications à la matrice polymère, et par exemple en apportant des séquences amorphes (telles que EVA, EBA), des séquences hydrophiles (e.g. polyéther-polyols, polyetser-polyols), et autres. Le matériau adsorbant zéolitique à liant organique de la présente invention comprend au moins une zéolite de type 3A et une matrice polymère comprenant un copolymère éthylène/acrylate de butyle.

Par ailleurs, le fort taux de charge des adsorbants zéolitiques de l'invention se traduit par une capacité d'adsorption volumique élevée.

Un autre avantage encore lié aux adsorbants zéolitiques selon la présente invention est caractérisée par le fait que les matériaux présentent une excellente stabilité dimensionnelle, et ceci même et surtout à la capacité d'adsorption maximale.

Cette caractéristique tout à fait inattendue permet d'envisager la préparations d'articles extrudés, moulés, et autres, dont les dimensions sont précisément conservées, sans subir de déformations, au cours du temps, quelle que soit la quantité de molécules adsorbées, en particulier l'eau. Ceci est particulièrement avantageux pour les articles extrudés, moulés, et autres, entrant dans la fabrication de matériaux de construction (profilés, cadres et huisseries de fenêtres, portes, etc.), de pièces d'assemblage (couvercles de boîtes, conteneurs, etc.).

Ainsi, les dimensions des matériaux adsorbants selon l'invention sont conservées et les articles comprenant lesdits matériaux adsorbants ne subissent pas de déformation. Il peut cependant être observé des modifications de dimensions et/ou de formes, mais dans ce cas, uniquement en raison des propriétés intrinsèques de la matrice qui peut être susceptible de « gonfler » naturellement.

Un autre aspect avantageux des adsorbants zéolitiques de la présente invention est la régénération possible desdits adsorbants. En effet, l'adsorption étant un phénomène réversible, l'adsorbant zéolitique à liant organique de l'invention peut être soumis à dégazage ou non, avant ou après utilisation, par exemple après utilisation et être ainsi régénéré, par exemple désorption, séchage, ou autres techniques connues de l'homme de l'art, sous réserve de ne pas dégrader la matrice polymère.

Les propriétés et avantages des adsorbants zéolitiques à liant organique de l'invention, tels qu'ils viennent d'être décrits permettent de disposer d'articles adsorbants extrudés, moulés, injectés, et autres, trouvant une utilisation dans de très nombreux domaines d'application.

En effet, de tels adsorbants/articles possèdent de très bonnes propriétés d'adsorption, mais aussi de relargage. En raison de leur taux de charge en zéolite(s) très élevé, les adsorbants de l'invention permettent l'adsorption (et/ou le relargage) de tout type de composés, tout comme les agglomérés zéolitiques à liant minéral connus de l'art antérieur. Ainsi, les composés pouvant être adsorbés et/ou relargués sont, à titre d'exemples non limitatifs, les liquides, les gaz, et autres, et notamment l'eau, l'oxygène, le gaz carbonique, l'azote, les composés organiques volatils (COV), monomères, molécules odorantes, contaminantes, et autres.

Les domaines d'application, i.e. d'utilisation, des adsorbants zéolitiques à liant organique selon la présente invention, sont par conséquent divers et variés. Les adsorbants de l'invention peuvent par exemple être avantageusement utilisés comme éléments adsorbants d'humidité, éléments de séparation de gaz, notamment dans les procédés de production d'oxygène, séparation de liquides, et autres.

Les adsorbants zéolitiques à liant organique de la présente invention sont particulièrement adaptés à une utilisation comme éléments adsorbants d'humidité (déshydratants) pouvant être insérés dans les fenêtres (double-vitrage), boîtiers électriques et électroniques, emballages (photos, pharmacie, produits lyophilisés, et autres) et plus généralement dans tout type de pièce logée, fixée, remplaçant avantageusement les sachets déshydratants connus de l'art antérieur.

Selon la nature du liant organique des adsorbants de l'invention, ceux-ci peuvent également être tout à fait adaptés à des usages dans les domaines alimentaire et agro-alimentaire.

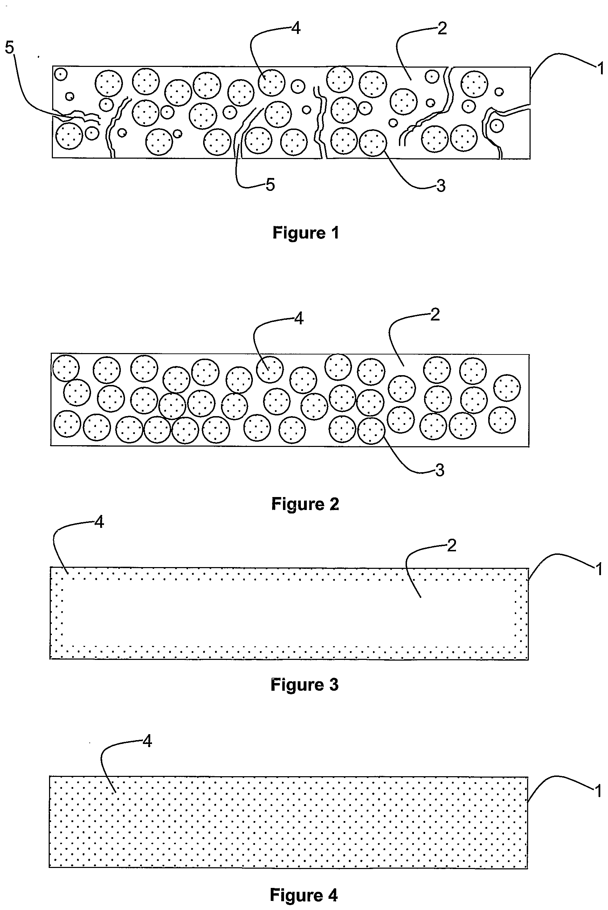

La Figure 1 représente un adsorbant zéolitique (1) à liant organique (2) selon l'art antérieur, comportant deux types de porosité : une microporosité représentée schématiquement par la zéolite sous forme de poudre (4) comprise dans des agglomérés (3) à liant minéral, et une macro- ou méso-porosité schématisée par les micro-canaux (5).

La Figure 2 représente un adsorbant zéolitique (1) à liant organique (2) selon l'art antérieur, comportant des agglomérés (3) à liant minéral de zéolite sous forme de poudre (4).

La Figure 3 représente un adsorbant zéolitique (1) à liant organique (2) selon l'art antérieur, dans lequel la répartition de la zéolite (4) n'est pas homogène dans tout l'adsorbant.

La Figure 4 représente un adsorbant zéolitique (1) à liant organique (2) selon l'invention, dans laquelle la poudre de zéolite (4) est répartie de manière homogène dans l'ensemble de l'adsorbant.

La présente invention est maintenant illustrée à l'aides exemples suivants qui n'ont aucune vocation à en limiter la portée, cette dernière étant définie par les revendications annexées, lues et interprétées à la lumière de la description ci-dessus.

Sauf indication contraire, les pourcentages sont exprimés en poids.

### Exemple 1

### Matériau adsorbant à base de copolymère éthylène/acrylate de butyle et de zéolite 3A

Deux types de copolymères éthylène / acrylate de butyle (EBA) ont été étudiés :
- Lotryl® 17 BA 07 (copolymère éthylène/acrylate de butyle (17%) ; Arkema) ;
- Lotryl® 30 BA 07 (copolymère éthylène/acrylate de butyle (30%) ; Arkema).

La zéolite utilisée est une poudre de zéolite de type 3A : Siliporite® NK30 AP, commercialisée par la société CECA. L'anti-oxydant utilisé dans les Essais 3 et 4 est Irganox® 1010 (CIBA).

Le compoundage est réalisé sur un co-malaxeur continu de marque Buss® de type PR46/70. La granulation est réalisée en coupe en tête sous aspersion d'eau (sous air pour l'essai E).

Les consignes de température (fourreaux et vis) sur le malaxeur et l'extrudeuse de reprise sont réglées entre 150°C et 185°C, en fonction des compositions, de manière à granuler le produit vers 180°C (température du fondu en filière). Le refroidissement du jonc extrudé est un refroidissement sous eau ou sous air.

L'alimentation des produits est réalisée simultanément avec :
- un prémix polymère / Irganox® 1010 (dosage total 3 kg/h) et
- l'adsorbant zéolitique : Siliporite® NK 30 AP (dosage 7 kg/h)

Les granulats obtenus sont introduits dans une extrudeuse monovis de diamètre 45, pour former un jonc extrudé de section rectangulaire de dimensions : longueur 60 mm, largeur 12 mm, épaisseur 7,5 mm, avec une température d'extrusion de 230-240°C, un débit d'extrusion de 10 kg/h. Ces joncs sont refroidis sous eau.

Les compositions des mélanges étudiés sont rassemblées dans le Tableau 1 ci-dessous. Les pourcentages sont des pourcentages massiques par rapport au poids total Les compositions des mélanges dans les essais 1, 2, 3, 4 de l'exemple 1 ne font pas partie du matériau adsorbant zéolitique selon l'invention.

**-- Tableau 1 --**

| | ***Essai 1*** | ***Essai 2*** | ***Essai 3*** | ***Essai 4*** |
|---|---|---|---|---|
| Lotryl® 17 BA 07 | 30% | - | 29,9% | - |
| Lotryl® 30 BA 07 | - | 30% | - | 29,9% |
| Siliporite® NK30 AP | 70% | 70% | 70% | 70% |
| Irganox® 1010 | - | - | 0,1% | 0,1% |

### Exemple 2

### Matériau adsorbant à base de polymères et de zéolite 3A (Siliporite® NK30 AP)

Selon les conditions d'extrusion décrites dans l'exemple 1, toutefois avec une température d'extrusion de 200-250°C, on réalise des joncs extrudés avec différents types de polymères, en présence d'anti-oxydant, comme décrit dans le Tableau 2 ci-dessous.

**-- Tableau 2 --**

| | ***Essai A*** | ***Essai B*** | ***Essai C*** | ***Essai D*** | ***Essai E*** |
|---|---|---|---|---|---|
| Lotryl® 17 BA 07 | 24,9% | 29,9% | 19,9% | | |
| Lacqtène® 1200MN18 | | | 10% | | |
| PPH® 11012 | | | | 29,9% | 29,9% |
| Siliporite® NK30 AP | 75% | 70% | 70% | 70% | 70% |
| Irganox® 1010 | 0,1% | 0,1% | 0,1% | 0,1% | 0,1% |
| Refroidissement | sous eau | sous eau | sous eau | sous eau | sous air |

| | | | | | |
|---|---|---|---|---|---|
| Lacqtène® 1200MN18 : polyéthylène basse densité (Arkema) PPH® 11012 : polypropylène (Total Les compositions des mélanges dans les essais B, C, D, E dans l'exemple 2 ne font pas partie du matériau adsorbant zéolitique selon l'invention. | | | | | |

### Exemple 3

### Caractérisation des produits extrudés

On réalise un taux de cendres par calcination directe à 1000°C, pendant 30 minutes, comme décrit dans la norme NF ISO 3451-1 (1997) pour chacun des exemples précédents. Les résultats suivants sont obtenus (Tableau 3) :

**-- Tableau 3 --**

| ***Essai*** | ***Taux de cendres (%)*** |
|---|---|
| 1 | 70 |
| 2 | 70 |
| 3 | 70 |
| 4 | 70 |
| A | 74 |
| B | 70 |
| C | 70 |
| D | 70 |
| E | 70 |

### Exemple 4

### Test d'adsorption d'humidité

Les tests d'adsorption d'humidité sur les joncs extrudés de l'Exemple 1 (Essais 1 à 4) sont réalisés dans une enceinte close à taux d'humidité contrôlée à 50% et à température ambiante, afin d'évaluer l'effet du type de polymère et de l'utilisation de l'anti-oxydant.

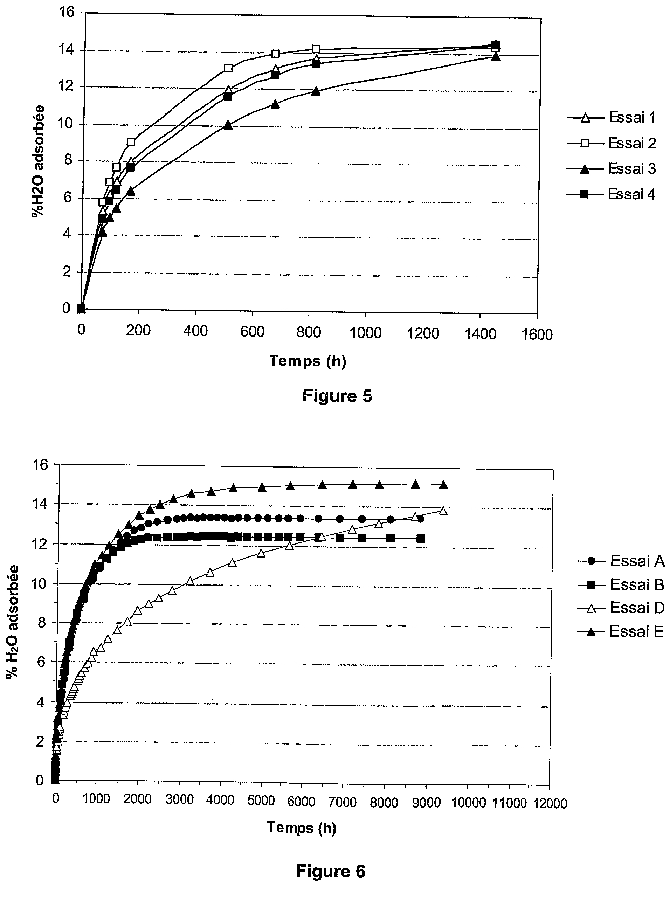

Les résultats d'adsorption d'eau en fonction des essais sont présentés sur le graphique de la Figure 5. On remarque que le maximum d'adsorption d'humidité n'est atteint qu'au bout d'environ 1400 heures.

Par ailleurs, il est observé que l'introduction d'une plus grande quantité de monomère polaire augmente la cinétique d'adsorption du jonc extrudé.

### Exemple 5

### Capacité d'adsorption et stabilité dimensionnelle

On plonge les joncs extrudés dans de l'eau à température ambiante.

La capacité maximale d'adsorption est atteinte au bout d'environ 4000 heures et est d'environ 18%.

On constate que les dimensions des joncs extrudés sont restées identiques, attestant de la stabilité dimensionnelle des adsorbants de l'invention pendant et après utilisation.

### Exemple 6

### Test d'adsorption d'humidité

On réalise des joncs, comme indiqué dans les exemples précédents, ainsi que des grains, des plaques et des barrettes, obtenus de manière similaire ou par injection ou par compression, selon les méthodes connue de l'homme du métier.

Les tests d'adsorption d'humidité sont réalisés dans une enceinte close à taux d'humidité contrôlée à 32% selon la norme NF 1279-2 (vitrage isolant) sur des granulés extrudés (de dimensions environ 3 mm de diamètre et 3 à 5 mm de longueur) et sur les joncs extrudés obtenus aux exemples précédents.

Les résultats d'adsorption sur grains sont présentés sur le graphique de la Figure 6.

On remarque que pour les matériaux préparés avec refroidissement sous eau, la cinétique d'adsorption de matériaux à base de polypropylène est plus lente qu'avec des matériaux à base de copolymères EBA. En outre, il est observé que le refroidissement sous air permet d'accélérer la cinétique d'adsorption et que l'on peut ajuster la cinétique avec la quantité de poudre de zéolite.

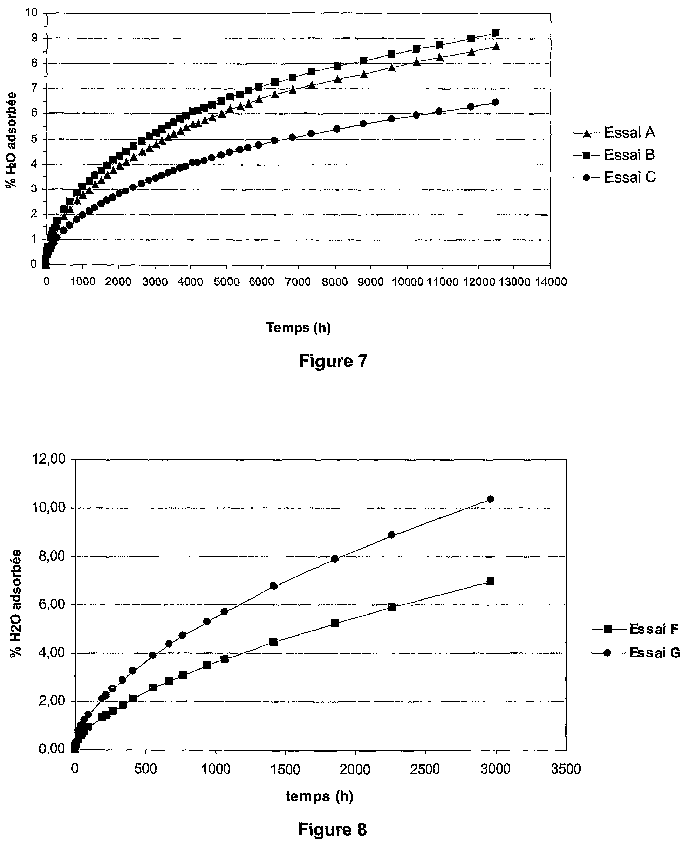

Les résultats d'adsorption sur joncs sont présentés sur le graphique de la Figure 7.

On constate que l'adsorption sur grain est plus rapide que sur joncs : il est donc possible de moduler la cinétique en fonction de la forme des objets. On constate également que plus le polymère est hydrophobe, plus la cinétique d'adsorption est lente.

### Exemple 7

### Préparation d'adsorbants avec différents types de zéolites

Des adsorbants à base polyéthylène basse densité / zéolite NK10 et G5XP (CECA) sont réalisés par extrusion sur Buss, avec les conditions opératoires suivantes :
- Températures de compoundage : 160-180°C ;
- Vitesse de la vis de malaxage : 240 tours/minute ;
- Vitesse de la vis transport : 13 tours/minute ;
- Débit de la machine : 10 kg/h ;
- Application d'un dégazage sur la vis transport ;
- Refroidissement sous eau ;
- Taille et forme des granulés (comme dans Exemple 6).

Les granulés obtenus sont ensuite transformés pour réaliser des plaques par compression (10 cm x 10 cm x 200 µm). Les compositions des Essais F et G sont les suivantes :

| | ***Essai F*** | ***Essai G*** |
|---|---|---|
| Lacqtène® 1200MN18 (Arkema) | 29,9 | 29,9 |
| Siliporite® NK10AP (CECA) | 70 | - |
| Siliporite® G5XP (CECA) | - | 70 |
| Irganox® 1010 (CIBA | 0,1% | 0,1% |

Les compositions des mélanges dans les essais F et G ne font pas partie du matériau adsorbant zéolitique selon l'invention.

### Exemple 8

### Test d'adsorption d'humidité

On réalise des tests d'adsorption d'humidité sur les plaques obtenues à l'exemple précédent (Essais F et G), selon les conditions opératoires décrites à l'exemple 6. Les résultats sont présentés sur le graphique de la Figure 8.

Ces résultats montrent que l'utilisation d'une zéolite de plus grande capacité d'adsorption permet d'obtenir des cinétiques d'adsorption plus rapides.

### Exemple 9

### Tests d'adsorption de molécules de type COV

Des tests d'adsorption de toluène (Essai H) sont réalisés sur une plaque identique à celle utilisée dans l'Essai G, dans une enceinte close à pression partielle de toluène contrôlée à 50% et à température ambiante, afin d'évaluer l'adsorption de molécules plus grosses de type COV.

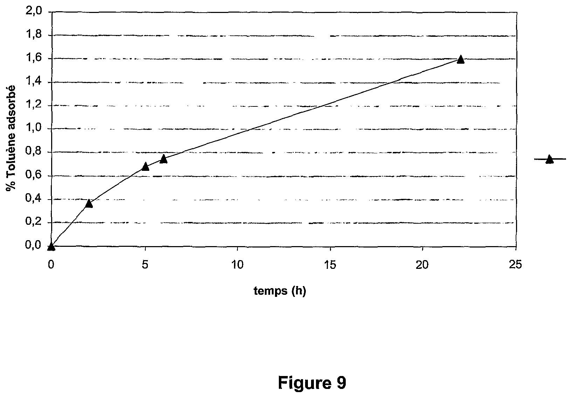

Les résultats sont présentés sur la Figure 9. On constate que les adsorbants zéolitiques de l'invention sont également efficaces pour adsorber des molécules de type COV.

## Revendications

1. Matériau adsorbant zéolitique à liant organique comprenant :
a) une matrice polymère, et
b) au moins une zéolite de type 3A,
et dans lequel :
- les cristaux de zéolite sont répartis de manière homogène dans ladite matrice, et
- la quantité de cristaux de zéolite est supérieure à 70% par rapport au poids total dudit matériau adsorbant, et inférieure à 99%, de préférence inférieure à 95%, de préférence encore inférieure à 90%, de manière tout à fait préférée inférieure ou égale à 85% en poids par rapport au poids total dudit matériau adsorbant, et
- la zéolite comprise dans le matériau adsorbant zéolitique est une zéolite naturelle, synthétique ou artificielle, dont la granulométrie moyenne est inférieure à 20 µm, de préférence inférieure à 15 µm et est supérieure à 0,05 µm, de préférence supérieure à 0,1 µm, et
- la matrice polymère comprend un copolymère éthylène/acrylate de butyle, et
- ledit matériau adsorbant zéolitique présentant un seul type de porosité qui est une micro-porosité.

2. Matériau selon la revendication 1, dans lequel la matrice polymère comprend, en totalité ou en partie, un ou plusieurs polymères, homo- et/ou copolymères, susceptibles de former un assemblage supramoléculaire.

3. Matériau selon l'une quelconque des revendications précédentes, comprenant en outre un ou plusieurs additifs choisis parmi les stabilisants UV, les pigments, les colorants, les anti-oxydants, les modifiants chocs, les matériaux à changement de phase (MCP), les agents ignifugeants, les agents odorants, les composés susceptibles de changer de couleur selon le degré d'adsorption de la zéolite.

4. Matériau selon l'une quelconque des revendications précédentes, dans lequel la zéolite est répartie de manière homogène dans le matériau adsorbant, sans gradient de concentration en zéolite dans le matériau adsorbant.

5. Utilisation d'un matériau selon l'une quelconque des revendications précédentes, pour l'adsorption et/ou le relargage des liquides, des gaz, et autres, et notamment de l'eau, de l'oxygène, du gaz carbonique, de l'azote, de composés organiques volatils (COV), monomères, molécules odorantes, contaminants.

6. Utilisation selon la revendication précédente, dans laquelle le matériau adsorbant est utilisé comme élément adsorbant d'humidité dans les fenêtres double-vitrage, boîtiers électriques ou électroniques, emballages photos, pharmacie, produits lyophilisés, et plus généralement dans tout type de pièce logée, fixée.

## Patentansprüche

1. Zeolithhaltiges Adsorptionsmaterial mit organischem Bindemittel, umfassend:
a) eine Polymermatrix, und
b) mindestens einen Zeolith des Typs 3A,
wobei weiterhin:
- die Zeolithkristalle auf gleichförmige Weise in der Matrix verteilt sind, und
- die Menge an Zeolithkristallen bezogen auf das Gesamtgewicht des Adsorptionsmaterials mehr als 70 % sowie bezogen auf das Gesamtgewicht des Adsorptionsmaterials weniger als 99 %, vorzugsweise weniger als 95 %, noch stärker bevorzugt weniger als 90 %, mit uneingeschränktem Vorzug höchstens 85 % ausmacht, und
- es sich bei dem Zeolith, welcher in dem zeolithhaltigen Adsorptionsmaterial enthalten ist, um einen natürlichen, synthetischen oder künstlichen Zeolith handelt, dessen mittlere Korngröße geringer als 20 µm, vorzugsweise geringer als 15 µm, sowie größer als 0,05 µm, vorzugsweise größer als 0,1 µm ist, und
- die Polymermatrix ein Ethylen/Butylacrylat-Copolymer umfasst, und
- das zeolithhaltige Adsorptionsmaterial eine einzige Art von Poren aufweist, bei welcher es sich um Mikroporen handelt.

2. Material nach Anspruch 1, wobei die Polymermatrix, vollständig oder in Teilbereichen, ein oder mehrere Polymere, Homo- und/oder Copolymere umfasst, die dazu befähigt sind, eine supramolekulare Anordnung zu bilden.

3. Material nach einem beliebigen der vorhergehenden Ansprüche, wobei es darüber hinaus einen oder mehrere Zusatzstoffe umfasst, die aus UV-Stabilisatoren, Pigmenten, Farbstoffen, Antioxidantien, Schlagzähmodifikatoren, Latentwärmespeichern (PCM), Flammschutzmitteln, Duftstoffen sowie Verbindungen ausgewählt sind, welche dazu befähigt sind, in Abhängigkeit vom Adsorptionsgrad des Zeoliths ihre Farbe zu ändern.

4. Material nach einem beliebigen der vorhergehenden Ansprüche, wobei der Zeolith auf gleichförmige Weise in dem Adsorptionsmaterial verteilt ist, ohne dass in dem Adsorptionsmaterial ein Konzentrationsgradient an Zeolith vorliegt.

5. Verwendung eines Materials nach einem beliebigen der vorhergehenden Ansprüche zur Adsorption und/oder Freisetzung von Flüssigkeiten, Gasen und Sonstigem, insbesondere von Wasser, von Sauerstoff, von Kohlendioxid, von Stickstoff, von flüchtigen organischen Verbindungen (VOC), Monomeren, geruchsaktiven Molekülen, Verunreinigungen.

6. Verwendung nach dem vorhergehenden Anspruch, wobei das Adsorptionsmaterial als feuchtigkeitsadsorbierendes Element in Fenster Doppelverglasungen, elektrischen oder elektronischen Einheiten, Verpackungen Fotos, Arzneimittel, gefriergetrocknete Produkte, und insbesondere in eingefügten, befestigten Bauteilen beliebiger Art verwendet wird.

## Claims

1. Zeolitic adsorbent material comprising an organic binder, comprising:
a) a polymer matrix, and
b) at least one zeolite of type 3A,
and in which:
- the zeolite crystals are homogeneously distributed in the said matrix, and
- the amount of zeolite crystals is greater than 70%, with respect to the total weight of the said adsorbent material, and less than 99%, preferably less than 95%, more preferably less than 90% and entirely preferably less than or equal to 85% by weight, with respect to the total weight of the said adsorbent material, and
- the zeolite included in the zeolitic adsorbent material is a natural, synthetic or artificial zeolite, the mean particle size of which is less than 20 µm, preferably less than 15 µm, and is greater than 0.05 µm, preferably greater than 0.1 µm, and
- the polymer matrix comprises an ethylene/butyl acrylate copolymer, and
- the said zeolitic adsorbent material exhibits just one type of porosity which is a microporosity.

2. Material according to Claim 1, in which the polymer matrix comprises, in all or in part, one or more polymers, homo- and/or copolymers, capable of forming a super molecular assembly.

3. Material according to either one of the preceding claims, additionally comprising one or more additives chosen from UV stabilizers, pigments, dyes, antioxidants, impact modifiers, phase changing materials (PCMs), flame retardants, odorous agents or compounds capable of changing colour according to the degree of adsorption of the zeolite.

4. Material according to any one of the preceding claims, in which the zeolite is distributed homogeneously in the adsorbent material without a zeolite concentration gradient in the adsorbent material.

5. Use of a material according to any one of the preceding claims for their adsorption and/or the release of liquids, gases and the like, in particular water, oxygen, carbon dioxide gas, nitrogen, volatile organic compounds (VOCs), monomers, odorous molecules or contaminants.

6. Use according to the preceding claim, in which the adsorbent material is used as moisture-adsorbing component in windows double glazing, electrical or electronic housings, packaging photo, pharmacy, freeze-dried products and more generally in any type of fixed housed part.
